# EUROPÄISCHE PATENTSCHRIFT

(11) **EP 2 941 315 B1**
(45) Veröffentlichungstag und Bekanntmachung des Hinweises auf die Patenterteilung: **11.01.2017**
(21) Anmeldenummer: 14702571.2
(22) Anmeldetag: 03.02.2014
(51) Int. Cl.: B01D 53/14, C10L 3/10

(54) **VERFAHREN UND VORRICHTUNG ZUR AUFBEREITUNG EINES GASSTROMS, INSBESONDERE ZUR AUFBEREITUNG EINES ERDGASSTROMS**
PROCESS AND APPARATUS FOR PROCESSING A GAS STREAM, ESPECIALLY FOR PROCESSING A NATURAL GAS STREAM
PROCÉDÉ ET DISPOSITIF SERVANT À LA PRÉPARATION D'UN FLUX DE GAZ, EN PARTICULIER D'UN FLUX DE GAZ NATUREL

(30) Priorität: 19.02.2013 DE 102013202597
(43) Veröffentlichungstag der Anmeldung: 11.11.2015
(73) Patentinhaber: Siemens Aktiengesellschaft, 80333 München (DE)
(72) Erfinder: BRECHTEL, Kevin, 91486 Uehlfeld (DE); FISCHER, Björn, 40476 Düsseldorf (DE); SCHNEIDER, Rüdiger, 65817 Eppstein (DE); SCHRAMM, Henning, 60528 Frankfurt am Main (DE)
(86) Internationale Anmeldenummer: PCT/EP2014/051992
(87) Internationale Veröffentlichungsnummer: WO 2014/127976

(56) Entgegenhaltungen:
- DE-A- 3 828 227
- DE-A1-102010 041 536
- FR-A1- 2 951 385
- US-A1- 2004 035 147
- US-A1- 2006 117 954

## Beschreibung

Die Erfindung betrifft ein Verfahren zur Aufbereitung eines Gasstroms und insbesondere zur Aufbereitung eines Erdgasstroms. Weiterhin betrifft die Erfindung eine Vorrichtung zur Durchführung eines entsprechenden Verfahrens.

Erdgas ist ein fossiler Brennstoff mit einem niedrigen Ausstoß von Kohlendioxid (CO₂) und einer geringen Emission von Abfallprodukten bei der Verbrennung. Sein Beitrag als eine der wichtigsten Energieressourcen der Welt steigt stetig an. Vor dem Hintergrund der Rohstoffverknappung, des dauerhaft steigenden Energiebedarfs und aus Gründen des Umweltschutzes stellt die Aufbereitung und Nutzung von Erdgas somit eine vielversprechende Möglichkeit zur effizienten und emissionsarmen Erzeugung von Energie dar.

Die direkte Nutzung von Roh-Erdgas ist jedoch bisweilen nur bedingt möglich. Aufgrund der sauren Bestandteile eines Erdgasstroms, wie insbesondere Schwefelwasserstoff (H₂S), können diese häufig nicht direkt in einer Gasturbine oder zum Pipelinetransport genutzt werden. Daher werden saure Erdgasströme größtenteils ungenutzt abgefackelt.

Alternativ hierzu wird versucht, Erdgas zur weiteren Nutzung mittels verschiedener Abscheidetechniken aufzubereiten. Hierzu werden physikalische oder chemische Absorptionsmedien eingesetzt, um die für eine weitere Verwendung geforderten Reinheiten des Erdgases zu gewährleisten. Im Allgemeinen wird dabei jedoch nur der Anteil an Schwefelwasserstoff und Kohlendioxid im Roh-Erdgas abgetrennt und wiedergewonnen. Das im Abgas einer nachgeschalteten Verbrennung enthaltene CO₂ oder das bei der Verbrennung aus dem Schwefelwasserstoff entstandene SO₂ bleibt häufig ungenutzt.

Um auch die im Abgas bzw. im sogenannten Rauchgas enthaltenen Komponenten abtrennen und nutzen zu können, wird beispielsweise vor der Verbrennung zuerst der Schwefelwasserstoff aus dem Roh-Erdgas entfernt und in einem der Verbrennung nachgeschalteten Verfahren im Rauchgas enthaltenes Kohlendioxid abgetrennt. Hierfür sind allerdings zwei voneinander getrennte Verfahren und die entsprechenden Techniken notwendig, wodurch die Investitionskosten bei einem Neubau und/oder bei der Nachrüstung bestehender Anlagen hoch sind.

Die US 2004035147 A1 beschreibt dazu ein Kraftwerk und eine Methode zur Herstellung von LNG (Liquefied Natural Gas), sowie eine Apparatur zur Rückgewinnung von in dem Erdgas enthaltenen CO₂. In dem Verfahren wird dem Erdgasstrom vor der Verflüssigung in einem ersten Absorber Schwefelwasserstoff mittels eines Absorptionsmediums abgetrennt. Zudem wird aus dem Abgas eines zur Energiegewinnung verfeuerten Erdgasstroms enthaltenes CO₂ in einem zweiten Absorber mittels des gleichen Absorptionsmediums abgetrennt. Im Anschluss werden zur Regenerierung des Absorptionsmediums in mindestens einem Desorber der Schwefelwasserstoff sowie das Kohlendioxid abgetrennt.

Die DE 10 2010 041 536 A1 offenbart ein Verfahren zur Abscheidung von Kohlendioxid mit einem ersten Absorptionsprozess, einem Verbrennungsprozess, einem zweiten Absorptionsprozess und einem Desorptionsprozess. Dabei wird dem Desorber ein mit Kohlendioxid angereicherte Lösungsmittel aus dem ersten Absorptionsprozess und aus dem zweiten Absorptionsprozess zusammen zugeführt.

Die DE 38 28 227 A1 beschreibt ein Verfahren zur Entfernung von CO₂ und H₂S aus Gasen mittels einer Absorptionsflüssigkeit. Dabei wird in einer Absorptionszone das CO₂ und H₂S durch die Absorptionsflüssigkeit absorbiert, und in einer oder mehrerer Entspannungsstufen regeneriert.

Bei diesen Methoden aus dem Stand der Rechnik wird zwar das gleiche Absorptionsmedium für beide Absorber benutzt, die Absorptionsmittelströme beider Absorber verlaufen aber parallel, sodass sich die beladenen Absorptionsmittelströme nicht in den Absorbern durchmischen.

Es ist daher eine erste Aufgabe der Erfindung, eine kostengünstige und gegenüber gängigen Aufbereitungsverfahren vereinfachte Alternative zur Aufbereitung eines Gasstromes und insbesondere eines sauren Erdgasstromes und der entsprechenden Nutzung hierbei entstehender Produkte anzugeben.

Eine zweite Aufgabe der Erfindung ist es, eine Vorrichtung anzugeben, mit der ein entsprechend optimiertes Verfahren durchführbar ist.

Die erste Aufgabe der Erfindung wird erfindungsgemäß gelöst durch ein Verfahren zur Aufbereitung eines Gasstroms, insbesondere zur Aufbereitung eines Erdgasstroms. Bei diesem Verfahren wird vor der Verbrennung des Gasstroms Schwefelwasserstoff in einem ersten Absorber mittels eines Absorptionsmediums aus dem Gasstrom abgetrennt, der aufbereitete, von Schwefelwasserstoff gereinigte, Gasstrom in einer Verbrennungseinrichtung verbrannt, im Abgas des verbrannten Gasstromes enthaltenes Kohlendioxid in einem zweiten Absorber mittels eines Absorptionsmediums abgetrennt, und der abgetrennte Schwefelwasserstoff sowie das abgetrennte Kohlendioxid zur Regenerierung des Absorptionsmediums in zumindest einem Desorber von dem Absorptionsmedium abgetrennt. Hierbei wird zur Abtrennung des Schwefelwasserstoffs aus dem Gasstrom und zur Abtrennung des Kohlendioxids aus dem Abgas das gleiche Absorptionsmedium verwendet, wobei das kohlendioxidhaltige Absorptionsmedium aus dem zweiten Absorber über eine Abführleitung des zweiten Absorbers unmittelbar in eine Zuführleitung des ersten Absorbers strömt.

Die Erfindung geht dabei von der Überlegung aus, dass die Nutzung von Erdgasströmen eine vielversprechende Möglichkeit zu effizienten und emissionsarmen Nutzung von Energie darstellt. Die wesentliche Herausforderung bei der Aufbereitung von Roh-Erdgasströmen stellt der Anteil saurer Gase dar, der eine direkte Nutzung der Gasströme häufig erschwert oder im ungünstigsten Fall sogar verhindert. Saure Erdgasströme werden deshalb häufig ungenutzt abgefackelt oder müssen mittels aufwändiger und teurer Techniken aufbereitet werden.

Hierzu erkennt die Erfindung, dass es möglich ist, einen nutzbaren Gasstrom aus einem Erdgasstrom, insbesondere mit einem hohen Anteil an sauren Komponenten, zu erzeugen, wenn zur Abtrennung von Schwefelwasserstoff aus dem Gasstrom vor der Verbrennung und zur Abtrennung von nach der Verbrennung im Abgas des verbrannten Gasstromes enthaltenem Kohlendioxid das gleiche Absorptionsmedium eingesetzt wird.

Das Absorptionsmedium erfüllt hierbei beide Trennaufgaben, das heißt es ist geeignet, den Schwefelwasserstoff vor der Verbrennung aus dem Roh-Erdgasstrom (Pre-Combustion-Capture) und gleichermaßen das Kohlendioxid aus dem Rauchgas nach der Verbrennung (Post-Combustion-Capture) durch Absorption abzutrennen. Aufgrund der Verwendung lediglich eines Absorptionsmediums können hinsichtlich der benötigten Menge an Absorptionsmedium Kosten eingespart werden. Weiterhin kann die Aufbereitung des Erdgases mit geringem prozessualem Aufwand sowie mit geringem zusätzlichem Platzbedarf umgesetzt werden. Eine verfahrenstechnische Integration in bestehende Prozessketten ist möglich.

Das eingesetzte Absorptionsmedium ist derart beschaffen, dass es sowohl den Schwefelwasserstoff als auch das Kohlendioxid absorbiert, wobei die Absorption der beiden Komponenten im Wesentlichen in zwei voneinander getrennten Absorbern geschieht, die strömungstechnisch miteinander verbunden sind, um einen Austausch des Absorptionsmediums zu gewährleisten.

Weiterhin kann zusätzlich zur Absorption des während der Verbrennung entstehenden CO₂ im zweiten Absorber auch das bereits vor der Verbrennung im Erdgas enthaltene CO₂ durch das Absorptionsmedium im ersten Absorber absorbiert werden. Gleiches gilt entsprechend für eventuell im Gasstrom verbliebenes H₂S bzw. SO₂/SOₓ. H₂S kann durch das Absorptionsmedium grundsätzlich auch nach der Verbrennung noch durch das Absorptionsmedium absorbiert und durch anschließende Desorption aus dem Absorptionsmedium weiteren Prozessschritten zugeführt werden. SO₂/SOₓ kann z.B. in Form von Kaliumsulfat ausgefällt werden. Dies geschieht beispielsweise in einem Reclaimer, in dem das Absorptionsmedium aufbereitet und gereinigt wird.

Mit anderen Worten wird durch die kombinierte Pre- und Post-Combustion-Aufbereitung von Roh-Erdgsströmen eine nahezu vollständige Rückhaltung der durch das Erdgas eingebrachten Kohlenstoff- und Schwefelfracht in einem gemeinsamen Prozess möglich, so dass bislang kaum oder nur begrenzt nutzbare Erdgasströme nahezu vollständig nutzbar werden.

So können durch das Verfahren die in bislang kaum genutzten Erdgasströmen enthaltenen Rohstoffe (Kohlenstoff als CO₂ und Schwefel als H₂S oder SO₂) unter weitgehender Vermeidung unerwünschter klimaschädlicher Emissionen gewonnen, gelagert und/oder in gewünschte Produkte überführt werden.

Der saure Erdgasstrom wird zur Aufbereitung vor der Verbrennung über eine Zuführleitung in den unteren Teil eines ersten Absorbers (H₂S-Absorber), insbesondere in Form einer Absorberkolonne, eingebracht. Durch die Absorption des Schwefelwasserstoffes in dem im Absorber befindlichen Absorptionsmedium wird der Schwefelwasserstoff und auch eventuell vorhandenes CO₂ absorbiert. Hierdurch wird insbesondere das H₂S-Level im Gasstrom gesenkt, wodurch irreparable Schäden, wie beispielsweise Korrosion, an der Verbrennungseinrichtung vermieden werden können.

Die Verbrennung selbst erfolgt in einer Verbrennungseinheit, insbesondere in einer Gasturbine, wobei aus dem von Schwefelwasserstoff gereinigten Gasstrom durch Verbrennung nutzbare Energie gewonnen wird. Das bei der Verbrennung in der Verbrennungseinrichtung entstehende Abgas, also das Rauchgas, ist nahezu frei von schwefelhaltigen Komponenten.

Das Abgas nach der Verbrennung, also das Rauchgas, wird einem zweiten Absorber (CO₂-Absorber), der insbesondere Teil einer gängigen CO₂-Abscheidevorrichtung ist, eingespeist. Um den Absorptionsprozess dort zu begünstigen, wird das Rauchgas in der Regel vor dem Eintritt in den Absorber in einem so genannten Flue-Gas-Kühler abgekühlt. Hierdurch werden die Bedingungen zur Absorption von CO₂ im Absorptionsmedium innerhalb des CO₂-Absorbers verbessert, da die Löslichkeit des CO₂ mit sinkender Temperatur zunimmt.

Sowohl das vor der Verbrennung im Roh-Erdgas enthaltene H₂S als auch das nach der Verbrennung im Rauchgas enthaltene CO₂ werden üblicherweise durch einen Absorptions-DesorptionsProzess mittels eines geeigneten Absorptionsmediums aus dem jeweiligen Gasstrom herausgewaschen. Der Gasstrom wird hierzu in jeweils einem entsprechenden Absorber mit dem Absorptionsmedium in Kontakt gebracht und dort absorbiert bzw. reversibel gebunden. Der Schwefelwasserstoff wird innerhalb des ersten Absorbers (Pre-Combustion-Capture) in dem gleichen Absorptionsmedium absorbiert, welches auch zur Rauchgasaufbereitung des Kohlendioxids in dem zweiten Absorber (Post-Combustion-Capture) eingesetzt wird.

Der vor der Verbrennung gereinigte Roh-Erdgasstrom und das gereinigte Rauchgas werden aus den jeweiligen Absorbern ausgelassen, wohingegen das beladene Absorptionsmedium des ersten und/oder des zweiten Absorbers zur Abtrennung von H₂S und CO₂ und zur Regenerierung des Absorptionsmediums unter Temperaturerhöhung in zumindest einen Desorber geleitet wird. Die Abtrennung im Desorber erfolgt üblicherweise thermisch, das heißt, H₂S und CO₂ werden durch Zufuhr von Wärme desorbiert und ausgetrieben und können dann einer Lagerung oder Verwertung zugeführt werden. Enthaltenes SOx wird nicht thermisch ausgetrieben, sondern z.B. als Kaliumsulfat ausgefällt. Dies geschieht bevorzugt in einem Reclaimer, in dem das Absorptionsmedium aufbereitet und gereinigt wird.

Das regenerierte Absorptionsmedium wird vom Desorber zu den Absorbern zurückgeführt und steht dann erneut zur Absorption von H₂S vor dem Verbrennungsprozess und zur Absorption von CO₂ nach dem Verbrennungsprozess zur Verfügung.

Die zur Absorption von Kohlendioxid verwendeten Absorptionsmedien müssen üblicherweise möglichst weitgehend frei von Schwefeldioxiden sein, da sie im Allgemeinen durch Schwefeldioxide deaktiviert werden. Dementsprechend ist es notwendig, dass das Rauchgas vor dem Eintritt in eine Abscheidevorrichtung für CO₂ nahezu vollständig entschwefelt ist, bevor es dort mit dem Absorptionsmedium in Kontakt kommt. Dies geschieht bereits durch die Absorption des Schwefelwasserstoffs in dem ersten Absorber vor der Verbrennung.

In einer vorteilhaften Ausgestaltung der Erfindung wird ein aminhaltiges Absorptionsmedium eingesetzt. Hierbei wird zweckmäßigerweise eine wässrige aminhaltige Lösung eingesetzt. Ein aminhaltiges Absorptionsmedium bietet die gewünschten Abtrennbedingungen sowohl für den Schwefelwasserstoff aus dem Roh-Erdgasstrom vor der Verbrennung ebenso wie für das Kohlendioxid aus dem Rauchgas nach der Verbrennung.

Das aminhaltige Absorptionsmedium kann grundsätzlich ein einzelnes Amin oder eine Mischung aus Aminen enthalten. Als Amine können primäre Amine, wie Monoethanolamin oder Diglykolamin, sekundäre Amine, wie Diethanolamin oder Diisopropanolamin, und tertiäre Amine wie Methyldiethanolamine eingesetzt sein. Ebenso können komplexe Amine wie zur Carbamatbildung sterisch gehinderte oder zyklische Amine eingesetzt werden.

Weiter vorteilhaft wird als Absorptionsmedium ein Aminosäuresalz eingesetzt. Auch hierbei ist die Verwendung einer wässrigen Aminosäuresalzlösung zweckmäßig. Bei der Verwendung eines Aminosäuresalzes als Absorptionsmedium hat es sich als vorteilhaft herausgestellt, wenn ein Aminosäuresalz eingesetzt wird, welches einen Kohlenstoff-Substituenten aus der Gruppe aufweist, die Wasserstoff, ein Alkyl, ein Hydroxyalkyl und ein Aminoalkyl enthält. Weiter bevorzugt wird ein Aminosäuresalz eingesetzt, dass einen Stickstoff-Substituenten aus der Gruppe aufweist, die Wasserstoff, ein Alkyl, ein Hydroxyalkyl und ein Halogenalkyl enthält. Wiederum kann ein einzelnes Aminosäuresalz wie beispielsweise ein Kaliumsalz des Glycins oder andere Aminosäuren eingesetzt sein. Auch können Mischungen verschiedener Aminosäuresalze als Absorptionsmittel eingesetzt werden. Der Einsatz eines Aminosäuresalzes bietet auch den Vorteil, dass auf eine Entschwefelung des Rauchgases verzichtet werden kann.

In einer weiter bevorzugten Ausgestaltung ist das Aminosäuresalz ein Salz eines Metalls, insbesondere eines Alkalimetalls.

Vorzugsweise erfolgen die Desorption des Schwefelwasserstoffs und die Desorption des Kohlendioxids aus dem Absorptionsmedium in einem gemeinsamen Desorber. Hierdurch können bereits bestehende Abscheidevorrichtungen für CO₂ genutzt werden, um sowohl Schwefelwasserstoff als auch Kohlendioxid zu desorbieren. Lediglich der Absorber zur Absorption von H₂S vor der Verbrennung eines Erdgasstroms muss nachträglich baulich ergänzt werden.

In einer weiter vorteilhaften Ausgestaltung erfolgen die Desorption des Schwefelwasserstoffs und die Desorption des Kohlendioxids aus dem Absorptionsmedium jeweils in einem separaten Desorber. Hierdurch kann eine saubere Trennung der Produkte voneinander sichergestellt werden. Nachträgliche Reinigungsschritte oder unerwünschte Reaktionen der Produkte entfallen nahezu vollständig. Um bei dem Einsatz von zwei sepa-Produkte voneinander sichergestellt werden. Nachträgliche Reinigungsschritte oder unerwünschte Reaktionen der Produkte entfallen nahezu vollständig. Um bei dem Einsatz von zwei separaten Absorbern gewährleisten zu könne, dass in den Desorbern jeweils im Wesentlichen nur H₂S bzw. im Wesentlichen nur CO₂ desorbiert wird, werden die Desorptionsbedingungen innerhalb der jeweiligen Desorber entsprechend gewählt. Dies kann insbesondere durch die gezielte Wahl des Absorptionsmediums und/oder die Temperatur innerhalb des jeweiligen Desorbers geschehen.

Die zweite Aufgabe der Erfindung wird erfindungsgemäß gelöst durch eine Vorrichtung zur Aufbereitung eines Gasstromes, insbesondere zur Aufbereitung eines Erdgasstromes, umfassend einen ersten Absorber zur Abtrennung von Schwefelwasserstoff aus dem Gasstrom mittels eines Absorptionsmediums, eine dem ersten Absorber nachgeschaltete Verbrennungseinrichtung zur Verbrennung des von Schwefelwasserstoff gereinigten Gasstromes, einen der Verbrennungseinrichtung nachgeschalteten zweiten Absorber zur Abtrennung von Kohlendioxid aus dem Abgas der Verbrennungseinheit mittels eines Absorptionsmediums, sowie zumindest einen Desorber zur Desorption von abgetrenntem Schwefelwasserstoff und abgetrenntem Kohlendioxid aus dem Absorptionsmedium. Hierbei umfasst der erste Absorber eine Zuführleitung und eine Abführleitung für das Absorptionsmedium, und wobei zur Überleitung von Absorptionsmedium die Zuführleitung des ersten Absorbers strömungstechnisch mit einer Abführleitung des zweiten Absorbers verbunden ist, und die Abführleitung strömungstechnisch mit der Zuführleitung des ersten Desorbers verbunden ist.

Auf diese Weise wird der Austausch des Absorptionsmediums zwischen den beiden Absorbern, die zur jeweiligen Entfernung von Schwefelwasserstoff und/oder von Kohlendioxid eingesetzt sind, möglich. Mit anderen Worten kann das Absorptionsmedium über die Verbindung zwischen der Abführleitung des zweiten Absorbers und der Zuführleitung des ersten Absorbers zwischen beiden Absorbern zirkulieren und so die gewünschte Trennaufgabe zur Aufbereitung des Erdgases erfüllen.

Vor allem bei dem Einsatz eines Aminosäuresalzes als ein Absorptionsmedium ist der zweite Absorber auch zur Abtrennung von SO₂/SOₓ aus dem Abgas der Verbrennungseinrichtung eingerichtet.

Durch die strömungstechnische Verbindung des ersten Absorbers (H₂S-Absorber) und des zweiten Absorbers (CO₂-Absorber) miteinander kann das eingesetzte Absorptionsmedium sowohl zur Entfernung von Schwefelwasserstoff aus dem Roh-Erdgasstrom vor der Verbrennung (Pre-Combustion-Capture) als auch zur Entfernung des Kohlendioxids aus dem Rauchgas nach der Verbrennung des Erdgases (Post-Combustion-Capture) genutzt werden.

Eine solche Vorrichtung zur Aufbereitung eines Gasstroms und insbesondere zur Aufbereitung eines Erdgasstroms erlaubt somit die Durchführung eines Verfahrens, bei welchem eine nahezu vollständige Rückhaltung der durch einen Erdgasstrom eingebrachten Kohlenstoff und Schwefelfracht möglich ist. So können die in bislang kaum genutzten Erdgasströmen enthaltenen Rohstoffe unter weitgehender Vermeidung unerwünschter klimaschädlicher Emissionen gewonnen, weiter genutzt und/oder in gewünschte Produkte überführt werden.

Weiter vorteilhaft ist der erste Absorber über dessen Abführleitung strömungstechnisch mit der Zuführleitung eines ersten Desorbers verbunden. Das mit H₂S und CO₂ beladene Absorptionsmedium wird zur Abtrennung der Komponenten und zur Regenerierung des Absorptionsmediums unter Temperaturerhöhung in den Desorber geleitet, wo die Abtrennung üblicherweise thermisch erfolgt. Sowohl das absorbierte CO₂ als auch das absorbierte H₂S werden durch Zufuhr von Wärme desorbiert und ausgetrieben. Mit anderen Worten stellt der erste Desorber einen gemeinsamen Desorber für H₂S und CO₂ dar.

Zweckmäßigerweise ist der erste Desorber über eine Rückführleitung strömungstechnisch mit der Zuführleitung der zweiten Absorber verbunden. So kann das in dem Desorber regenerierte Absorptionsmedium dem zweiten Absorber zugeführt werden und steht dort erneut zur Absorption von Kohlendioxid und im weiteren, nach dem Verlassen des zweiten Absorbers, auch zur Absorption von Schwefelwasserstoff im ersten Absorber zu Verfügung.

Bei der Zufuhr des beladenen Absorptionsmediums zum ersten Desorber wird dieses zweckmäßigerweise mittels einer Pumpe dorthin gepumpt, wobei das beladene Absorptionsmedium einen Wärmetauscher passiert. In dem Wärmetauscher wird die Wärme des vom ersten Desorber zum zweiten Absorber strömenden, regenerierten Absorptionsmediums auf das aus dem ersten Absorber strömende, beladene Absorptionsmedium übertragen. Der Wärmetauscher nutzt somit die Abwärme in der Rückführleitung des ersten Desorbers, um das Absorptionsmedium aus dem ersten Absorber vor dem Eintritt in den Desorber vorzuwärmen.

Vorteilhafterweise ist dem ersten Desorber eine Abführleitung angeschlossen, die in einer Aufbereitungseinrichtung mündet. Die Aufbereitungseinrichtung dient der Aufbereitung und Überführung der desorbierten Komponenten in weitere Produkte. Beispielsweise kann der verbleibende CO₂-reiche Gasstrom verdichtet werden, um den Transport zu einer Speicherstätte zu ermöglichen. Aus dem Schwefelwasserstoff kann beispielsweise mit dem sogenannten Clauss-Prozess bzw. in einer entsprechenden Clauss-Anlage durch Reaktion mit Sauerstoff elementarer Schwefel hergestellt werden.

In einer weiter vorteilhaften Ausgestaltung ist an die Abführleitung des zweiten Absorbers eine Abzweigleitung angeschlossen, die strömungstechnisch mit der Zuführleitung eines zweiten Desorbers verbunden ist. Bei einer solchen Ausgestaltung wird lediglich ein Teil des mit CO₂ beladenen Absorptionsmediums aus dem Absorbersumpf des zweiten Absorbers über die Abführleitung dem ersten Absorber zugeführt. Der über die Abzweigleitung strömende Teil des mit CO₂ beladenen Absorptionsmediums wird über die Abzweigleitung direkt dem zweiten Desorber zugeführt.

Das dem ersten Absorber zugeführte Absorptionsmedium kann dort wie vorbeschrieben zur Absorption von Schwefelwasserstoff aus einem Erdgasstrom genutzt und schließlich dem ersten Desorber zur Regenerierung zugeführt werden. Das über die Abzweigleitung dem zweiten Desorber zugeführte Absorptionsmedium wird dort ebenfalls regeneriert. Bei einer solchen Ausgestaltung muss das Absorptionsmedium im zweiten Desorber nur von CO₂ gereinigt werden, da eine Beladung des über die Abzweigleitung strömenden Absorptionsmediums mit H₂S nicht erfolgt. Zweckmäßigerweise sind bei einer Vorrichtung mit zwei Desorbern beide Desorber insbesondere mit einer entsprechenden Aufbereitungseinrichtung zur Aufbereitung und Überführung der desorbierten Komponenten in weitere Produkte verbunden.

Bevorzugt ist dem ersten Desorber und/oder dem zweite Desorber ein Reboiler angeschlossen. Der Reboiler liefert als ein sogenannter Sumpfverdampfer die notwendige Regenerationswärme für die Trennung von absorbiertem CO₂ und H₂S vom Absorptionsmedium. Das beladene Absorptionsmedium wird hierbei durch Dampf, welcher im Reboiler erzeugt wird, regeneriert. Zur Erzeugung des Dampfes innerhalb des Reboilers wird dieser üblicherweise mit importiertem Dampf, beispielsweise aus einem angeschlossenen Dampfkraftwerk beheizt.

Weiter vorteilhaft sind der erste Desorber und der zweite Desorber wärmetechnisch miteinander gekoppelt. Die Kopplung erfolgt hierbei über einen Wärmetauscher. Der Wärmetauscher ist hierzu in der Abführleitung des ersten Desorbers eingebunden und dient der Beheizung des Reboilers des zweiten Desorbers. Mit anderen Worten ist der Wärmetauscher in den Reboilerkreislauf des zweiten Desorbers eingebunden. Der Reboiler des zweiten Desorbers wird somit nicht mit importiertem Dampf beheizt, sondern nutzt vorteilhafterweise die Abwärme der ersten Desorbers.

Zweckmäßigerweise ist die Verbrennungseinrichtung eine Gasturbine. In der Gasturbine wird das von Schwefelwasserstoff weitestgehend gereinigte Erdgas verbrannt und das bei der Verbrennung entstehende Rauchgas an den zweiten Absorber zur Absorption von enthaltenem Kohlendioxid sowie gegebenenfalls von SO₂/SOₓ weitergeleitet.

Bevorzugt ist zwischen der Verbrennungseinrichtung und dem zweiten Absorber eine Wärmerückgewinnungseinrichtung angeordnet. Das bei der Verbrennung entstehende Rauchgas wird vor der Einleitung in den CO₂-Absorber zur Abkühlung durch diese Wärmerückgewinnungseinrichtung geleitet, um die Absorption in dem Absorber zu begünstigen.

Weitere vorteilhafte Ausgestaltungen für die Vorrichtung ergeben sich aus den auf das Verfahren gerichteten Unteransprüchen. Die hierzu genannten Vorteile können sinngemäß auf die Vorrichtung übertragen werden.

Im Folgenden werden Ausführungsbeispiele der Erfindung anhand einer Zeichnung erläutert. Dabei zeigen:
FIG 1 eine Vorrichtung zur Aufbereitung eines Erdgasstroms mit zwei strömungstechnisch verbundenen Absorbern und einem Desorber,
FIG 2 eine weitere Vorrichtung zur Aufbereitung eines Erdgasstroms mit zwei strömungstechnisch verbundenen Absorbern und zwei separaten Desorbern, sowie
FIG 3 eine weitere Vorrichtung zur Aufbereitung eines Erdgasstroms mit zwei strömungstechnisch verbundenen Absorbern und zwei wärmetechnisch gekoppelten Desorbern.

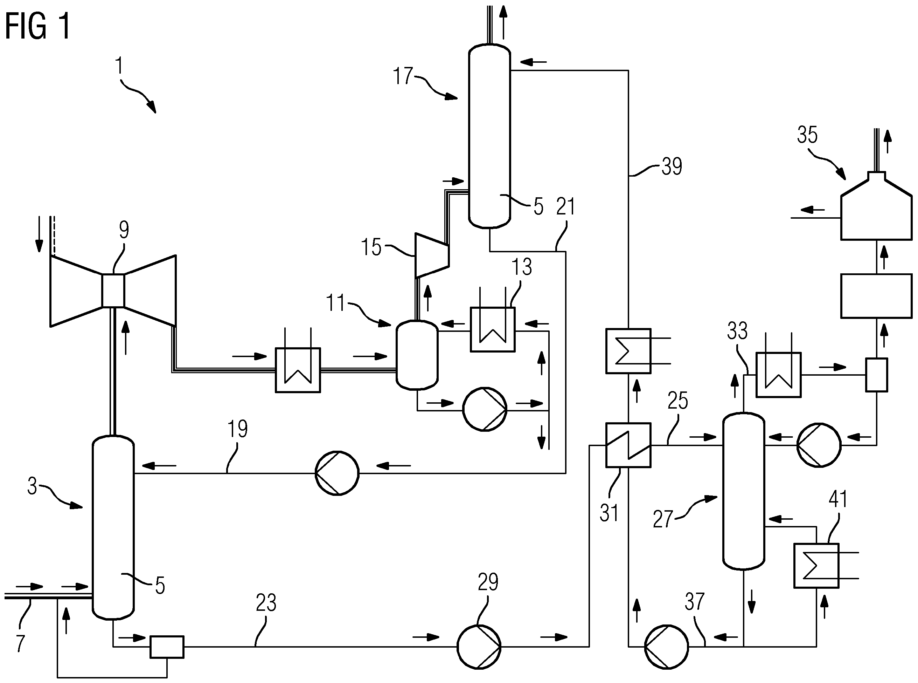

FIG 1 zeigt eine Vorrichtung 1 zur Aufbereitung eines Erdgasstromes (EG) durch Absorption von Schwefelwasserstoff (H₂S) und Kohlendioxid (CO₂). Die Vorrichtung 1 umfasst einen als H₂S-Absorber ausgebildeten ersten Absorber 3 mit einem Absorptionsmedium 5 zur Abtrennung von Schwefelwasserstoff aus dem Erdgasstrom.

Der Roh-Erdgasstrom strömt über eine Zuleitung 7 in den ersten Absorber 3 und kommt dort mit dem Absorptionsmedium 5 in Kontakt. Als Absorptionsmedium 5 ist eine wässrige Aminlösung eingesetzt, in welcher der im Erdgasstrom enthaltene Schwefelwasserstoff absorbiert wird.

Der von H₂S weitestgehend gereinigte Erdgasstrom wird dann vom ersten Absorber 3 ausgehend einer als Gasturbine ausgebildeten nachgeschalteten Verbrennungseinrichtung 9 zugeführt. In der Gasturbine 9 wird der Erdgasstrom verbrannt und das resultierende Rauchgas (RG) anschließend einer Wärmerückgewinnungseinrichtung 11 mit einem Flue-Gas-Kühler 13 zugeführt. Der Flue-Gas-Kühler 13 kühlt dabei das Rauchgas aus der Verbrennung in der Gasturbine 9 für die Absorption vor. Über ein dem Flue-Gas-Kühler 13 nachgeschaltete Gebläse 15 wird das Rauchgas in einen zweiten Absorber 17 eingeströmt.

Der zweite Absorber 17 ist als ein CO₂-Absorber ausgebildet und dient entsprechend der Abtrennung des im Rauchgas enthaltenen Kohlendioxids. Hierzu wird das Rauchgas nach der Verbrennung im zweiten Absorber 17 ebenfalls mit dem Absorptionsmedium 5 in Kontakt gebracht und das im Rauchgas enthaltenen CO₂ absorbiert.

Das eingesetzte Absorptionsmedium 5 dient somit gleichermaßen der Absorption des Schwefelwasserstoffs aus dem Erdgasstrom vor der Verbrennung (Pre-Combustion-Capture) und dem Kohlendioxid aus dem Rauchgas nach der Verbrennung (Post-Combustion-Capture). Entsprechend sind der erste Absorber 3 und der zweite Absorber 17 zum Austausch des Absorptionsmediums 5 strömungstechnisch miteinander verbunden.

Die Verbindung wird dadurch ermöglicht, dass der erste Absorber 3 eine Zuführleitung 19 für das Absorptionsmedium 5 umfasst, die mit einer Abführleitung 21 des zweiten Absorbers 17 verbunden ist. Auf diese Weise wird der Austausch des Absorptionsmediums 5 zwischen den beiden Absorbern 3, 17 möglich.

Das Absorptionsmedium 5 erfüllt hierbei beide Trennaufgaben, das heißt es ist geeignet, den Schwefelwasserstoff in dem ersten Absorber 3 vor der Verbrennung aus dem Erdgas und gleichermaßen das Kohlendioxid aus dem Rauchgas nach der Verbrennung im zweiten Absorber 17 abzutrennen.

Weiterhin umfasst der erste Absorber 3 eine Abführleitung 23. Über diese Abführleitung 23 ist der erste Absorber 3 strömungstechnisch mit der Zuführleitung 25 eines Desorbers 27 verbunden. Über diese beiden Leitungen 23, 25 wird das mit H₂S und CO₂ beladene Absorptionsmedium 5 zur Regenerierung unter Temperaturerhöhung mittels einer Pumpe 29 in den Desorber 27 gepumpt.

Hierbei passiert das beladene Absorptionsmedium 5 einen Wärmetauscher 31, in welchem die Wärme des von dem Desorber 27 zum zweiten Absorber 17 strömenden, regenerierten Absorptionsmediums 5 auf das vom ersten Absorber 3 zugeführte, beladene Absorptionsmedium 5 übertragen wird. Der Wärmetauscher 31 nutzt hierbei die Abwärme des ersten Desorbers 27, um das Absorptionsmedium 5 aus dem ersten Absorber 3 vor dem Eintritt in den Desorber 27 vorzuwärmen.

Innerhalb des Desorbers 27 werden das im Absorptionsmedium 5 absorbierte CO₂ und das absorbierte H₂S thermisch desorbiert. Zur Aufbereitung und Überführung der desorbierten Komponenten ist dem ersten Desorber 27 eine Abführleitung 33 angeschlossen, die in einer Aufbereitungseinrichtung 35 mündet. In der Aufbereitungseinrichtung 35, die als eine Clauss-Anlage ausgebildet ist, wird mittels durch Reaktion mit Sauerstoff Schwefel hergestellt. Der desorbierte CO₂-reiche Gasstrom kann verdichtet werden, um den Transport zu einer Speicherstätte zu ermöglichen. Der Desorber 27 ist somit als ein gemeinsamer Desorber für H₂S und CO₂ ausgestaltet.

Dem ersten Desorber 27 ist weiterhin eine Rückführleitung 37 angeschlossen. Die Rückführleitung 37 ist strömungstechnisch mit der Zuführleitung 39 des zweiten Absorbers 17 verbunden. Das in dem Desorber 27 regenerierte Absorptionsmedium 5 wird über die strömungstechnische Verbindung zwischen der Rückführleitung 37 und der Zuführleitung 39 in den zweiten Absorber 17 zurückgeführt und steht dort zu erneuten Absorption von CO₂ aus dem Rauchgas und im weiteren auch zur Absorption von H₂S aus dem Roh-Erdgasstrom im ersten Absorber 3 zu Verfügung.

Weiterhin ist dem Desorber 27 ein Reboiler 41 angeschlossen, der die notwendige Regenerationswärme für die Trennung von CO₂ und H₂S vom Absorptionsmedium 5 liefert. Das beladene Absorptionsmedium 5 wird hierbei durch Dampf, welcher im Reboiler 41 erzeugt wird, regeneriert. Der Reboiler 41 wird mit importiertem Dampf, beispielsweise aus einem angeschlossenen Dampfkraftwerk, beheizt, was vorliegend nicht gezeigt ist.

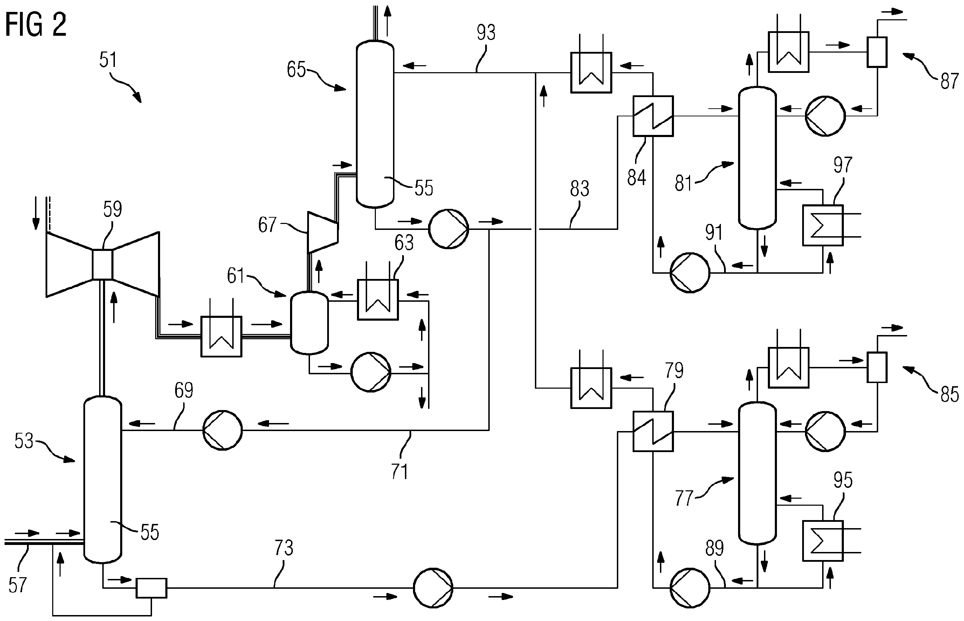

In FIG 2 ist eine weitere Vorrichtung 51 zur Aufbereitung eines Erdgasstromes (EG) durch Absorption von Schwefelwasserstoff (H₂S) und Kohlendioxid (CO₂)gezeigt. Die Vorrichtung 51 umfasst, wie die Vorrichtung 1 gemäß FIG 1, einen als H₂S-Absorber ausgebildeten ersten Absorber 53 mit einem Absorptionsmedium 55 zur Abtrennung des Schwefelwasserstoffs aus dem Erdgasstrom.

Hierzu wird das Erdgas dem ersten Absorber 53 über eine Zuleitung 57 zugeführt und kommt dort mit dem Absorptionsmedium 55 in Kontakt. Als Absorptionsmedium 55 ist eine wässrige Aminosäuresalzlösung eingesetzt.

Der im Erdgas enthaltene Schwefelwasserstoff wird in dem ersten Absorber 55 durch Absorption entfernt und der gereinigte Erdgasstrom dann einer als Gasturbine ausgebildeten nachgeschalteten Verbrennungseinrichtung 59 zugeführt. In der Gasturbine 59 wird der Erdgasstrom verbrannt und das bei der Verbrennung entstehende Rauchgas (RG) einer Wärmerückgewinnungseinrichtung 61 zugeführt. Die Wärmerückgewinnungseinrichtung 61 umfasst einem Flue-Gas-Kühler 63, der das Rauchgas für die Absorption in einem zweiten Absorber 65 vorkühlt. Über ein dem Flue-Gas-Kühler 63 nachgeschaltetes Gebläse 67 wird das Rauchgas in den zweiten Absorber 65 eingeblasen.

Der zweite Absorber 65 dient der Abtrennung des im Rauchgas enthaltenen Kohlendioxids. Hierzu wird das Rauchgas im zweiten Absorber 65 mit dem Absorptionsmedium 55 in Kontakt gebracht und das im Rauchgas enthaltene CO₂ vom Absorptionsmedium 55 absorbiert. Auch hier dient das Absorptionsmedium 55 gleichermaßen der Absorption des Schwefelwasserstoffes aus dem Erdgasstrom vor der Verbrennung und dem Kohlendioxid aus dem Rauchgas nach der Verbrennung. Entsprechend sind der erste Absorber 53 und der zweite Absorber 65 zum Austausch des Absorptionsmediums 55 strömungstechnisch miteinander verbunden.

Die strömungstechnische Verbindung dadurch gewährleistet, dass die Zuführleitung 69 des ersten Absorbers 53 mit einer Abführleitung 71 des zweiten Absorbers 65 verbunden ist. So kann der Austausch des Absorptionsmediums 55 zwischen beiden Absorbern 53, 65 erfolgen.

Zusätzlich zur Zuführleitung 69 umfasst der erste Absorber 53 eine Abführleitung 73, die strömungstechnisch mit der Zuführleitung 75 eines ersten Desorbers 77 verbunden ist. Über die Abführleitung 73 kann beladenes Absorptionsmedium 55 aus dem ersten Absorber 53 nach Passieren eines Wärmetauschers 79 in den ersten Desorber 77 strömen und dort regeneriert werden.

Im Unterschied zur Vorrichtung 1 gemäß FIG 1 wird der erste Desorber 77 jedoch im Wesentlichen zur Desorption von Schwefelwasserstoff aus dem Absorptionsmedium 55 genutzt. Das im Absorptionsmedium 55 absorbierte Kohlendioxid wird in einem separaten zweiten Desorber 81 desorbiert. Um zu gewährleisten, dass in dem ersten Desorber 77 im Wesentlichen der Schwefelwasserstoff und in dem zweiten Desorber 81 im Wesentlichen das Kohlendioxid desorbiert, werden die Desorptionsbedingungen innerhalb der jeweiligen Desorber 77, 811 entsprechend gewählt. Dies kann insbesondere durch die gezielte Wahl des Absorptionsmediums 55 und/oder der Temperatur innerhalb des jeweiligen Desorbers 77, 81 erreicht werden.

Um eine Desorption von H₂S und CO₂ in zwei separaten Desorbern zu ermöglichen, ist der Abführleitung 71 des zweiten Absorbers 65 eine Abzweigleitung 83 angeschlossen, über die der zweite Absorber 65 strömungstechnisch mit dem zweiten Desorber 81 verbunden ist.

Ein Teil des mit CO₂ beladenen Absorptionsmediums 55 wird aus dem Absorbersumpf des zweiten Absorbers 65 über dessen Abführleitung 71 dem ersten Absorber 53 zugeführt. Das Absorptionsmedium 55 wird dort zur Absorption von Schwefelwasserstoff genutzt und schließlich dem ersten Desorber 77 zur Regenerierung zugeführt werden. Der erste Desorber 77 ist somit im Wesentlichen als ein H₂S-Absorber ausgebildet.

Ein anderer Teil des Absorptionsmediums 55 strömt durch die Abzweigleitung 83 zum zweiten Desorber 81. Hierbei passiert das Absorptionsmedium 55 ebenfalls einen Wärmetauscher 84, in welchem die Wärme des von dem Desorber 81 zum zweiten Absorber 65 strömenden, regenerierten Absorptionsmediums 55 auf das vom zweiten Absorber 65 zugeführte, beladene Absorptionsmedium 55 übertragen wird.

Da das zum zweiten Desorber 81 strömende Absorptionsmedium 55 im Wesentlichen nur mit CO₂ beladen ist, ist der zweite Desorber 81 im Wesentlichen als ein CO₂-Absorber ausgebildet. Beide Desorber 77, 81 sind vorliegend jeweils mit einer Aufbereitungseinrichtung 85, 87 zur weiteren Verwendung und/oder Lagerung der desorbierten Komponenten ausgebildet.

Zur Weiterverwendung des regenerierten Absorptionsmediums 55 sind beide Desorber 77, 81 jeweils mit einer Rückführleitung 89, 91 versehen. Beide Rückführleitung 89, 91 sind strömungstechnisch mit der Zuführleitung 93 des zweiten Absorbers 65 verbunden, so dass das regenerierte Absorptionsmedium 55 aus beiden Desorbern 77, 81 dem zweiten Absorber 65 zur weiteren Nutzung zugeführt werden kann.

Zusätzlich sind beide Desorber 77, 81 mit jeweils einem Reboiler 95, 97 versehen, der die notwendige Regenerationswärme für die Trennung von CO₂ und H₂S vom Absorptionsmedium 55 liefert. Das beladene Absorptionsmedium 55 wird hierbei durch Dampf, welcher in den jeweiligen Reboilern 95, 97 erzeugt wird, regeneriert.

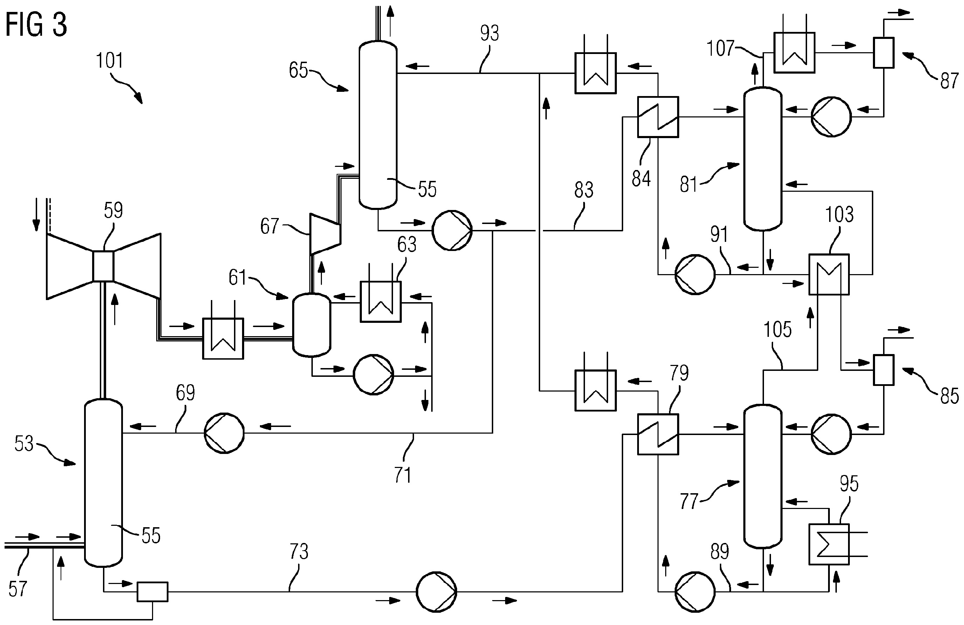

FIG 3 zeigt eine weitere Vorrichtung 101, die der Aufbereitung eines Erdgasstromes (EG) durch Absorption von Schwefelwasserstoff (H₂S) und Kohlendioxid (CO₂) dient. Da die Vorrichtung 101 im Wesentlichen der Vorrichtung 51 gemäß FIG 2 entspricht, sind die jeweiligen Komponenten der Vorrichtung 101 mit den gleichen Bezugszeichen versehen, wie die Komponenten der Vorrichtung 51. Auch die detaillierte Beschreibung der Vorrichtung 51 kann sinngemäß auf die Vorrichtung 101 gemäß FIG 3 übertragen werden.

Der Unterschied der Vorrichtung 101 im Vergleich zur Vorrichtung 51 gemäß FIG 2 liegt in der Wärmekopplung der beiden Desorber 77, 81. Die Kopplung zwischen dem ersten Desorber 77 und dem zweiten Desorber 81 erfolgt über einen Wärmetauscher 103. Der Wärmetauscher 103 ist in der Abführleitung 105 des ersten Desorbers 77 eingebunden und dient der Beheizung des Reboilers 97 des zweiten Desorbers 81. Der Reboiler 97 wird hierbei somit nicht mit importiertem Dampf beheizt, sondern nutzt die Abwärme der ersten Desorbers 77.

Insgesamt bieten alle Vorrichtungen 1, 51, 101 gemäß den FIG 1, 2 und 3 bzw. die mit diesen Vorrichtungen 1, 51, 101 durchführbaren Verfahren die Möglichkeit, mit geringem Kosten und geringem prozessualem Aufwand in bislang kaum genutzten Erdgasströmen enthaltene Rohstoffe unter weitgehender Vermeidung unerwünschter klimaschädlicher Emissionen zu gewinnen und je nach Anwendung weiter zu verarbeiten.

Der Einsatz des gleichen Absorptionsmediums 5, 55 zur Absorption sowohl von H₂S vor der Verbrennung (Pre- Combustion-Capture) und von CO₂ nach der Verbrennung (Post- Combustion-Capture) ermöglich weiterhin eine kostengünstige Fahrweise mit geringem prozessualem Aufwand.

## Patentansprüche

1. Verfahren zur Aufbereitung eines schwefelwasserstoffhaltigen Gasstromes, insbesondere zur Aufbereitung eines Erdgasstromes, bei dem
- vor der Verbrennung des Gasstroms Schwefelwasserstoff in einem ersten Absorber (3, 53) mittels eines Absorptionsmediums (5, 55) aus dem Gasstrom abgetrennt wird,
- der aufbereitete, von Schwefelwasserstoff gereinigte, Gasstrom in einer Verbrennungseinrichtung (9, 59) verbrannt wird,
- im Abgas des verbrannten Gasstromes enthaltenes Kohlendioxid in einem zweiten Absorber (17, 65) mittels eines Absorptionsmediums (5, 55) abgetrennt wird, und
- der abgetrennte Schwefelwasserstoff sowie das abgetrennte Kohlendioxid zur Regenerierung des Absorptionsmediums (5, 55) in zumindest einem Desorber (27, 77, 81) von dem Absorptionsmedium (5, 55) abgetrennt werden, wobei zur Abtrennung des Schwefelwasserstoffs aus dem Gasstrom und zur Abtrennung des Kohlendioxids aus dem Abgas das gleiche Absorptionsmedium (5, 55) verwendet wird, wobei das kohlendioxidhaltige Absorptionsmittel aus dem zweiten Absorber (17, 65) über eine Abführleitung (21, 71) des zweiten Absorbers (17, 65) unmittelbar in eine Zuführleitung (19, 69) des ersten Absorbers (3, 53) strömt.

2. Verfahren nach Anspruch 1, wobei ein aminhaltiges Absorptionsmedium (5, 55) verwendet wird.

3. Verfahren nach Anspruch 1 oder 2, wobei als Absorptionsmedium (5, 55) ein Aminosäuresalz verwendet wird.

4. Verfahren nach einem der vorhergehenden Ansprüche, wobei die Desorption des Schwefelwasserstoffs und die Desorption des Kohlendioxids aus dem Absorptionsmedium (5, 55) in einem gemeinsamen Desorber (27) erfolgen.

5. Verfahren nach einem der Ansprüche 1 bis 3, wobei die Desorption des Schwefelwasserstoffs und die Desorption des Kohlendioxids aus dem Absorptionsmedium (5, 55) jeweils in einem separaten Desorber (77, 81) erfolgen.

6. Vorrichtung (1, 51, 101) zur Aufbereitung eines Gasstromes, insbesondere zur Aufbereitung eines Erdgasstromes, umfassend einen ersten Absorber (3, 53) zur Abtrennung von Schwefelwasserstoff aus dem Gasstrom mittels eines Absorptionsmediums (5, 55), eine dem ersten Absorber (3, 53) nachgeschaltete Verbrennungseinrichtung (9, 59) zur Verbrennung des von Schwefelwasserstoff gereinigten Gasstromes, einen der Verbrennungseinrichtung nachgeschalteten zweiten Absorber (17, 65) zur Abtrennung von Kohlendioxid aus dem Abgas der Verbrennungseinrichtung (9, 59) mittels eines Absorptionsmediums (5, 55), sowie zumindest einen Desorber (27, 77, 81) zur Desorption von abgetrenntem Schwefelwasserstoff und abgetrenntem Kohlendioxid aus dem Absorptionsmedium (5, 55), wobei der erste Absorber (3, 53) eine Zuführleitung (19, 69) und eine Abführleitung (23, 73) für das Absorptionsmedium (5, 55) umfasst, und die Abführleitung (23, 73) des ersten Absorbers (3, 53) strömungstechnisch mit der Zuführleitung (25, 75, 93) des zumindest einen Desorbers (27, 77, 81) verbunden ist,
**dadurch gekennzeichnet, dass** zur Überleitung von Absorptionsmedium die Zuführleitung (19, 69) des ersten Absorbers (3, 53) strömungstechnisch mit einer Abführleitung (21, 71) des zweiten Absorbers (17, 65) verbunden ist.

7. Vorrichtung (1, 51, 101) nach Anspruch 6, wobei der erste Desorber (27, 77, 81) über eine Rückführleitung (37, 89, 91) strömungstechnisch mit der Zuführleitung (39, 69) des zweiten Absorbers (17, 65) verbunden ist.

8. Vorrichtung (1, 51, 101) nach Anspruch 6 oder 7, wobei dem ersten Desorber (27, 77, 81) eine Abführleitung (33, 105, 107) angeschlossen ist, die in einer Aufbereitungseinrichtung (33, 85, 87) mündet.

9. Vorrichtung (1, 51, 101) nach einem der Ansprüche 6 bis 8, wobei an die Abführleitung (21, 71) des zweiten Absorbers (17, 65) eine Abzweigleitung (83) angeschlossen ist, die strömungstechnisch mit der Zuführleitung (25, 75, 93) eines zweiten Desorbers (27, 77, 81) verbunden ist.

10. Vorrichtung (1, 51, 101) nach Anspruch 9, wobei dem ersten Desorber (27, 77, 81) und/oder dem zweiten Desorber (27, 77, 81) ein Reboiler (41, 95, 97) angeschlossen ist.

11. Vorrichtung (1, 51, 101) nach einem der Ansprüche 9 oder 10, wobei der erste Desorber (27, 77, 81) und der zweite Desorber (27, 77, 81) wärmetechnisch miteinander gekoppelt sind.

12. Vorrichtung (1, 51, 101) nach einem der Ansprüche 6 bis 11, wobei die Verbrennungseinrichtung (5, 59) eine Gasturbine ist.

13. Vorrichtung (1, 51, 101) nach einem der Ansprüche 6 bis 12, wobei zwischen der Verbrennungseinrichtung (5, 59) und dem zweiten Absorber (17, 65) eine Wärmerückgewinnungseinrichtung (11, 61) angeordnet ist.

## Claims

1. Method for the treatment of a gas stream containing hydrogen sulfide, in particular for the treatment of a natural gas stream, in which,
- before the combustion of the gas stream, hydrogen sulfide is separated out of the gas stream in a first absorber (3, 53) by means of an absorption medium (5, 55),
- the treated gas stream purified of hydrogen sulfide is burnt in a combustion apparatus (9, 59),
- carbon dioxide contained in the exhaust gas of the burnt gas stream is separated in a second absorber (17, 65) by means of an absorption medium (5, 55), and
- the separated hydrogen sulfide and the separated carbon dioxide are separated from the absorption medium (5, 55) in at least one desorber (27, 77, 81) for the regeneration of the absorption medium (5, 55),
wherein
the same absorption medium (5, 55) is used for separating the hydrogen sulfide out of the gas stream and for separating the carbon dioxide out of the exhaust gas, the absorption medium containing carbon dioxide flowing out of the second absorber (17, 65) via a discharge line (21, 71) of the second absorber (17, 65) directly into a delivery line (19, 69) of the first absorber (3, 53).

2. Method according to Claim 1, an amine-containing absorption medium (5, 55) being used.

3. Method according to Claim 1 or 2, an amino acid salt being used as absorption medium (5, 55).

4. Method according to one of the preceding claims, the desorption of the hydrogen sulfide and the desorption of the carbon dioxide out of the absorption medium (5, 55) taking place in a common desorber (27).

5. Method according to one of Claims 1 to 3, the desorption of the hydrogen sulfide and the desorption of the carbon dioxide out of the absorption medium (5, 55) taking place in each case in a separate desorber (77, 81).

6. Device (1, 51, 101) for the treatment of a gas stream, in particular for the treatment of a natural gas stream, comprising a first absorber (3, 53) for separating hydrogen sulfide out of the gas stream by means of an absorption medium (5, 55), a combustion apparatus (9, 59), following the first absorber (3, 53), for the combustion of the gas stream purified of hydrogen sulfide, a second absorber (17, 65), following the combustion apparatus, for separating carbon dioxide out of the exhaust gas of the combustion apparatus (9, 59) by means of an absorption medium (5, 55), and at least one desorber (27, 77, 81) for the desorption of separated hydrogen sulfide and of separated carbon dioxide out of the absorption medium (5, 55), wherein
the first absorber (3, 53) comprises a delivery line (19, 69) and a discharge line (23, 73) for the absorption medium (5, 55), and the discharge line (23, 73) of the first absorber (3, 53) is flow-connected to the delivery line (25, 75, 93) of the at least one desorber (27, 77, 81),
**characterized in that**
the delivery line (19, 69) of the first absorber (3, 53) flow-connected to a discharge line (21, 71) of the second absorber (17, 65) for the exchange of absorption medium.

7. Device (1, 51, 101) according to Claim 6, the first desorber (27, 77, 81) being flow-connected to the delivery line (39, 69) of the second absorber (17, 65) via a recirculation line (37, 89, 91).

8. Device (1, 51, 101) according to Claim 6 or 7, the first desorber (27, 77, 81) having connected to it a discharge line (33, 105, 107) which issues in a treatment apparatus (33, 85, 87).

9. Device (1, 51, 101) according to one of Claims 6 to 8, a branch line (83) being connected to the discharge line (21, 71) of the second absorber (17, 65) and being flow-connected to the delivery line (25, 75, 93) of a second desorber (27, 77, 81).

10. Device (1, 51, 101) according to Claim 9, a reboiler (41, 95, 97) being connected to the first desorber (27, 77, 81) and/or to the second desorber (27, 77, 81).

11. Device (1, 51, 101) according to either one of Claims 9 and 10, the first desorber (27, 77, 81) and the second desorber (27, 77, 81) being coupled thermally to one another.

12. Device (1, 51, 101) according to one of Claims 6 to 11, the combustion apparatus (5, 59) being a gas turbine.

13. Device (1, 51, 101) according to one of Claims 6 to 12, a heat recovery apparatus (11, 61) being arranged between the combustion apparatus (5, 59) and the second absorber (17, 65).

## Revendications

1. Procédé de traitement d'un courant gazeux contenant de l'hydrogène sulfuré,
notamment pour traiter un courant de gaz naturel dans lequel
- avant la combustion du courant gazeux, on en sépare de l'hydrogène sulfuré dans un premier absorbeur (3, 53) au moyen d'un milieu (5, 55) d'absorption,
- on brûle, dans un dispositif (9, 59) de combustion, le courant gazeux traité, épuré de l'hydrogène sulfuré,
- on sépare, dans un deuxième absorbeur (17, 65) au moyen d'un milieu (5, 55) d'absorption, du dioxyde de carbone contenu dans le gaz résiduaire du courant gazeux brûlé,
- on sépare du milieu (5, 55) d'absorption dans au moins un désorbeur (27, 77, 81) l'hydrogène sulfuré séparé ainsi que le dioxyde de carbone séparé pour régénérer le milieu (5, 55) d'absorption,
dans lequel
pour séparer l'hydrogène sulfuré du courant gazeux et pour séparer le dioxyde de carbone du gaz résiduaire, on utilise le même milieu (5, 55) d'absorption, l'agent d'absorption contenant du dioxyde de carbone s'écoulant du deuxième absorbeur (17, 65) par un conduit (21, 71) du deuxième absorbeur (17, 65) directement dans un conduit (19, 69) d'entrée du premier absorbeur (3, 53).

2. Procédé suivant la revendication 1, dans lequel on utilise un milieu (5, 55) d'absorption aminé.

3. Procédé suivant la revendication 1 ou 2, dans lequel on utilise comme milieu (5, 55) d'absorption un sel d'acide aminé.

4. Procédé suivant l'une des revendications précédentes, dans lequel on effectue la désorption de l'hydrogène sulfuré et la désorption du dioxyde de carbone du milieu (5, 55) d'absorption dans un désorbeur (27) commun.

5. Procédé suivant l'une des revendications 1 à 3, dans lequel on effectue la désorption de l'hydrogène sulfuré et la désorption du dioxyde de carbone du milieu (5, 55) d'absorption respectivement dans un désorbeur (77, 81) distinct.

6. Installation (1, 51, 101) de traitement d'un courant gazeux, notamment de traitement d'un courant de gaz naturel, comprenant un premier absorbeur (3, 53) de séparation de l'hydrogène sulfuré du courant gazeux au moyen d'un milieu (5, 55) d'absorption, un dispositif (9, 59) de combustion monté en aval du premier absorbeur (3, 53) pour brûler le courant gazeux épuré d'hydrogène sulfuré, un deuxième absorbeur (17, 65) monté en aval du dispositif de combustion pour séparer du dioxyde de carbone du gaz résiduaire du dispositif (9, 59) de combustion au moyen d'un milieu (5, 55) d'absorption, ainsi qu'au moins un désorbeur (27, 77, 81) pour désorber de l'hydrogène sulfuré séparé et du dioxyde de carbone séparé du milieu (5, 55) d'absorption, dans lequel
le premier absorbeur (3, 53) a un conduit (19, 69) d'entrée et un conduit (23, 73) de sortie du milieu (5, 55) d'absorption, et le conduit (23, 73) de sortie du premier absorbeur (3, 53) communique en technique d'écoulement avec le conduit (25, 75, 93) d'entrée du au moins un désorbeur (27, 77, 81),
**caractérisé en ce que**, pour conduire le milieu d'absorption, le conduit (19, 69) d'entrée du premier absorbeur (3, 53) communique en technique d'écoulement avec un conduit (21, 71) de sortie du deuxième absorbeur (17, 65).

7. Installation (1, 51, 101) suivant la revendication 6, dans laquelle le premier désorbeur (27, 77, 81) communique en technique d'écoulement avec le conduit (39, 69) d'entrée du deuxième absorbeur (17, 65) par un conduit (37, 89, 91) de recyclage.

8. Installation (1, 51, 101) suivant la revendication 6 ou 7, dans laquelle, au premier premier désorbeur (27, 77, 81) est raccordé un conduit (33, 105, 107) de sortie qui débouche dans un dispositif (33, 85, 87) de traitement.

9. Installation (1, 51, 101) suivant l'une des revendications 6 à 8, dans laquelle, au conduit (21, 71) de sortie du deuxième absorbeur (17, 65) est raccordé un conduit (83) de dérivation, qui communique en technique d'écoulement avec le conduit (25, 75, 93) d'entrée d'un deuxième désorbeur (27, 77, 81).

10. Installation (1, 51, 101) suivant la revendication 9, dans laquelle, au premier désorbeur (27, 77, 81) et/ou au deuxième désorbeur (27, 77, 81) est raccordé un rebouilleur (41, 95, 97).

11. Installation (1, 51, 101) suivant l'une des revendications 9 ou 10, dans laquelle le premier désorbeur (27, 77, 81) et le deuxième désorbeur (27, 77, 81) sont couplés ensemble en technique de la chaleur.

12. Installation (1, 51, 101) suivant l'une des revendications 6 à 11, dans laquelle le dispositif (5, 59) de combustion est une turbine à gaz.

13. Installation (1, 51, 101) suivant l'une des revendications 6 à 12, dans laquelle un dispositif (11, 61) de récupération de la chaleur est monté entre le dispositif (5, 59) de combustion et le deuxième absorbeur (17, 65).
